# EUROPÄISCHE PATENTANMELDUNG

(11) **EP 1 050 745 A1**
(43) Veröffentlichungstag der Anmeldung: **08.11.2000**
(21) Anmeldenummer: 99108921.0
(22) Anmeldetag: 05.05.1999
(51) Int. Cl.: G01D 5/245, G01D 5/244

(54) **Verfahren und Vorrichtung zur Bestimmung der tatsächlichen Drehrichtungsumkehr eines nachlaufenden Drehantriebes**

(71) Anmelder: SIEMENS AKTIENGESELLSCHAFT, 80333 München (DE)
(72) Erfinder: Preymann, Leonard, 1230 Wein (AT)

(57) **Zusammenfassung**

Verfahren zur inkrementalen Bestimmung der tatsächlichen Drehrichtungsumkehr eines nach vorhergehender Drehrichtungsumschaltung nachlaufenden Drehantriebes und Vorrichtung zur Durchführung des Verfahrens

Von einem asymmetrischen Geberrad (1) wird eine Folge von drehzahlproportionalen Pulssignalen (N;S;S_{L}) mit zwischenliegendem, davon unterschiedlichem Referenzsignal (S_{L}) abgegeben und von einem einzigen statorseitigen Sensor (3) empfangen; aus der Zahl der nach einer Drehrichtungsumschaltung zwischen zwei Referenzsignalen gemessenen Pulssignale wird ein Pulssignal-Korrekturwert zur Bestimmung des der tatsächlichen Drehrichtungsumkehr (U) entsprechenden Pulssignalzählwertes definiert.

## Beschreibung

Die Erfindung bezieht sich auf ein Verfahren zur inkremementalen Bestimmung der tatsächlichen Drehrichtungsumkehr eines nach vorhergehender Drehrichtungsumschaltung nachlaufenden Drehantriebes gemäß Patentanspruch 1 sowie auf eine Vorrichtung zur Durchführung des Verfahrens gemäß Patentanspruch 7.

Verfahren bzw. Vorrichtungen der vorgenannten Art werden z.B. bei Stellantrieben als Information für die Position eines von dem Stellantrieb bewegten Verstellteiles benötigt; bevorzugte Anwendungsbeispiele sind motorische Fensterheber- bzw. Schiebedachantriebe in Kraftfahrzeugen, insbesondere bei Ausrüstung mit einer schnell reagierenden und hohen Sicherheitsanforderungen entsprechenden Schließkraftbegrenzung.

Zur Ermittlung der jeweiligen Öffnungs- bzw. Schließposition eines durch den Drehantrieb angetriebenen Schließteils werden üblicherweise Inkremental-Gebersysteme mit einem rotorseitigen Geberrad, insbesondere einem Magnetrad, z.B. auf der Welle des Ankers eines den Stellantrieb antreibenden Elektromotors, und statorseitig mit zumindest einem die Signale des rotierenden Geberrades detektierenden Sensor, insbesondere einem Hallsensor, verwendet. Das drehende, z.B. als induktiver Geber gezahnte oder als magnetischer Geber mit umfangsseitig aufmagnetisierten Polen versehene, Geberrad erzeugt bei Drehung aufgrund des Zahn- bzw. Polwechsels in dem statorseitigen Sensor, gegebenenfalls nach entsprechender Signalaufbereitung, ein im wesentlichen rechteckförmiges Pulssignal mit flankenseitig begrenzenden High-Signalen bzw. Low-Signalen.

Bei Einklemmerkennung wird zur Schadensvermeidung üblicherweise der Motor des Stellantriebes durch Umpolen, z.B. mittels eines Relais, seiner Speisespannung zur Drehrichtungsumkehr veranlaßt. Aufgrund elektrisch induktiver und/oder mechanischer Trägheit erfolgt die tatsächliche mechanische Drehrichtungsumkehr mit einer gewissen zeitlichen Verzögerung gegenüber der eigentlichen Drehrichtungsumschaltung durch Umpolen der Speisespannung. Der Zeitpunkt und die Position der tatsächlichen Drehrichtungsumkehr ist also nicht mit dem Zeitpunkt der Spannungsumkehrung identisch und kann bei Fehlen eines statorseitigen zweiten, gegenüber einem statorseitigen ersten Sensor umfangsversetzten Sensor auch nicht aus einem Phasenvergleich der sensierten Flankensignale der beiden Sensoren ermittelt werden.

Gemäß Aufgabe vorliegender Erfindung soll mit geringem fertigungs- bzw. meßtechnischem Bauteile-Aufwand, insbesondere unter Verwendung nur eines statorseitigen Sensors, die tatsächliche mechanische Drehrichtungsumkehr nach einer Drehrichtungsumschaltung detektierbar und der jeweiligen Position des von dem Drehantrieb bewegten Verstellteils der entsprechende richtige Pulssignalzählwert zuordbar sein, so daß dieser mit einem für den gesamten Hubweg abgespeicherten Pulszählwert-Referenzmuster, z.B. im Sinne einer gewährleisteten Schließstellung, koordinierbar ist.

Die Lösung dieser Erfindung gelingt durch ein Verfahren gemäß Patentanspruch 1 sowie eine Vorrichtung zur Durchführung dieses Verfahrens gemäß Patentanspruch 7; vorteilhafte Ausführungsbeispiele des Verfahrens sind Gegenstand der Ansprüche 2 bis 6 und vorteilhafte Ausgestaltungen der Vorrichtung sind Gegenstand der Ansprüche 8 bis 10.

Aufgrund des erfindungsgemäßen Verfahrens ist nach einer Drehrichtungsumschaltung die Zahl der Pole bzw. die Zahl der Pulssignale zwischen zwei nacheinander an dem einzigen statorseitigen Sensor vorbeirotierenden Referenzsignale zählbar, wobei das erste Referenzsignal noch der vorherigen einen Drehrichtung und das folgende Referenzsignal aufgrund der zwischenliegenden tatsächlichen Drehrichtungsumkehr der anschließenden anderen Drehrichtung zuzuordnen ist; wird nun die Zahl der in diesem Zeitraum gezählten Pulssignale von dem an sich falschen, bei Induktion durch das zweite Referenzsignals gebildeten aufaddierten Gesamt-Pulssignalzählwert als Korrekturwert subtrahiert, ergibt sich der korrekte tatsächliche, der augenblicklichen Position des von dem Drehantrieb bewegten Verstellteils, insbesondere der Kraftfahrzeug-Fensterscheibe bzw. des Kraftfahrzeug-Schiebedaches, entsprechende aufaddierte Gesamt-Pulssignalzählwert.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: den schematischen Aufbau einer Vorrichtung zur inkremmentalen Ermittlung der tatsächlichen Drehrichtungsumkehr eines Drehantriebes unter Verwendung eines 10-poligen asymmetrischen Magnetrades als rotorseitiges Geberrad sowie mit einem statorseitigen Sensor in Form eines Hall-Elementes;
- FIG 2: die Polfolge bzw. zugehörige Pulssignalfolge zwischen zwei Referenzsignalen mit zwischenliegender Drehrichtungsumkehr des Geberrades sowie die zugehörige unkorrigierte sowie korrigierte Polung des zugehörigen Gesamt-Pulssignalzählwertes;
- FIG 3: die Polfolge bzw. Pulssignalfolge des asymmetrischen Geberrades gemäß FIG 1 bei gleichbleibender Drehrichtung.

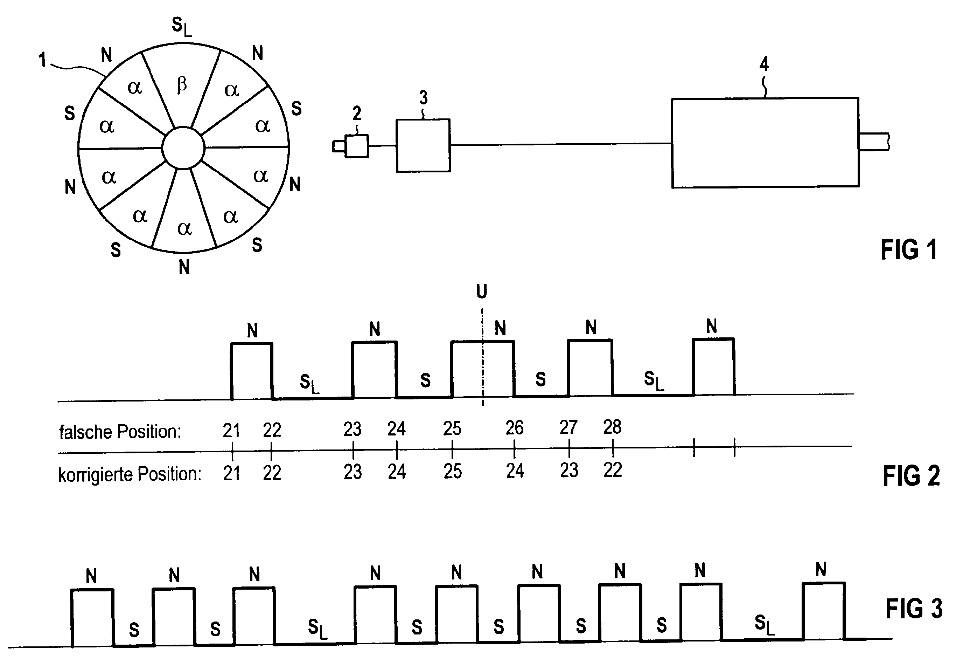

FIG 1 zeigt ein Inkremental-Gebersystem mit einem Geberrad 1 in Form eines mit fünf Polpaaren bzw. zehn Polen segmentartig magnetisierten Magnetrades und einem statorseitigen Sensor 2 in Form eines Hall-Elementes, dessen detektierte Pulse in einer Signalvorrichtung 3 zu Pulssignalen aufbereitet und in einer als Auswertevorrichtung 4 mitbenutzten Steuervorrichtung, z.B. zur Ansteuerung eines Fensterhebers bzw. eines Schiebedaches in einem Kraftfahrzeug, ausgewertet und zum Korrekturausgleich verarbeitet werden.

Das asymmetrische Geberrad 1 weist neun Pole N;S der Polbreite α und einen Pol S_{L} mit vergrößerter Polbreite β auf, der als Referenzsignal für die erfindungsgemäße Erkennung der tatsächlichen mechanischen Drehrichtungsumkehr vorgesehen ist. Selbstverständlich ist bei der Auslegung der Polbreiten α bzw. β darauf zu achten, daß auch im ungünstigsten Fall einer fertigungsbedingten Polbreitenschwankung die Polbreite β des als Referenz-Signalgeber vorgesehenen Poles S_{L} signifikant unterscheidbar ist von den übrigen zueinander gleichen Polbreiten α. Die mit dem Geberrad 1 an dem Sensor 2 vorbeirotierenden Pole N;S;S_{L} ergeben - wie in FIG 3 angedeutet - nach ihrer Aufbereitung in der Signalvorrichtung 3 im wesentlichen rechteckförmige, den Polen N;S;S_{L} zuzuordnende Pulssignale mit jeweils einer begrenzenden steigenden Flanke ("High") und einer begrenzenden fallenden Flanke ("Low").

Das Ausführungsbeispiel geht gemäß FIG 2 von einer Drehrichtungsumschaltung durch Relais-Umpolung der Speisespannung eines den Drehantrieb antreibenden Elektromotors bei einer Position des von dem Drehantrieb zu verstellenden Verstellteils, insbesondere dem Fenster eines Kraftfahrzeuges, bei einer Position aus, der der Pulssignalzählwert 21 zugeordnet ist. Die vorherige und augenblickliche Drehrichtung ist durch die Ansteuerung des Relais bzw. die Zuordnung der Pole der speisenden Gleichstromquelle an den Antriebsmotor des Drehantriebes definiert. Der Drehantrieb verläuft nun zunächst noch in der vorherigen Drehrichtung, jedoch mit verlangsamter Umdrehungsgeschwindigkeit, was durch die zunächst sich vergrößernde Pulslänge der Pole N;S_{L};N;S angedeutet ist. Während des dritten Poles N ist - wie durch die strichpunktierte Mittellinie als Umkehrpunkt U angedeutet - die tatsächliche Drehrichtungsumkehr angenommen, so daß anschließend die Pulslängen der weiteren Pole S;N;S_{L};N sich wieder verkürzen. Der Umkehrpunkt U der mechanischen Drehrichtungsumkehr ist somit erreicht, wenn die Pulslängen der vor der Drehzahlumschaltung gleichlangen Pole nach monotoner Zunahme wieder monoton abnehmen. Die Pulslänge des Poles, bei dem die Drehrichtung tatsächlich umkehrt, ist bei dieser Betrachtung unberücksichtigt zu lassen.

Durch Erfassen der Zahl der Pulssignale aufgrund der steigenden bzw. fallenden Flanken zwischen den zwei asymmetrischen, d.h. im vorliegenden Fall verlängerten Pole S_{L}, kann der Korrekturwert für die richtige Positionsdefinierung dadurch bestimmt werden, daß die Zahl der im statorseitigen Sensor 3 erfaßten Pulssignale zwischen den beiden in der einen bzw. anderen Drehrichtung nacheinander vorbeirotierenden Referenzsignale aufgrund der Pole S_{L} erfaßten Pulssignale, im vorliegenden Fall sechs Pulssignale vom Pulssignalzählwert 22 bis zum Pulssignalzählwert 28, vom dem bei Erreichen des Endwertes dieser Meßzeit, d.h. vom Pulssignalwert 28, abzuziehen sind, so daß sich als korrigierte Position für das von dem Drehantrieb bewegte Verstellteil der Pulssignalzählwert 22 ergibt.

Nach einer Ausgestaltung der Erfindung ist zur Vereinfachung der Messung vorgesehen, zwischen den beiden Zeitpunkten des Referenzsignals in Form des verlängerten Poles S_{L} nur die steigenden oder nur die fallenden Flanken zu zählen und als Korrekturwert dann die doppelte Zahl dieser gemessenen steigenden Flanken von dem Positionszählwert am Ende der Meßzeit zu subtrahieren.

## Patentansprüche

1. Verfahren zur inkrementalen Bestimmung der tatsächlichen Drehrichtungsumkehr eines Drehantriebes nach vorhergehender Drehrichtungsumschaltung anlaufenden Drehantriebes, insbesondere für Fensterheber- bzw. Schiebedachantriebe in einem Kraftfahrzeug,
- mit einer Folge von rotorseitigen drehzahlproportionalen Pulssignalen mit zwischenliegendem, davon unterschiedlichem Referenzsignal;
- mit einer statorseitigen Pulssignalzählung;
- mit einer Bestimmung der tatsächlichen Drehrichtungsumkehr nach einer Drehrichtungsumschaltung, insbesondere einer entsprechenden Umpolung eines elektrischen Drehantriebmotors, durch Berücksichtigung eines aus der Zählung der Pulssignale zwischen zwei Referenzsignalen nach einer Drehrichtungsumschaltung abgeleiteten Pulssignal-Korrekturwertes.

2. Verfahren nach Anspruch 1
- mit einer Folge von Pulssignalen jeweils konstanter Pulssignallänge und einem Referenzsignals mit dazu unterschiedlicher Pulssignallänge.

3. Verfahren nach Anspruch 1 und/oder 2
- mit Pulssignalen in Form von im wesentlichen rechteckigen Signalen mit jeweils einer begrenzenden steigenden Flanke ("High") und einer begrenzenden fallenden Flanke ("Low").

4. Verfahren nach zumindest einem der Ansprüche 1-3
- mit je einem Referenzsignal pro je einer Umdrehung des Drehantriebs bzw. eines proportionalen Drehimpulsgebers.

5. Verfahren nach zumindest einem der Ansprüche 1-4
- mit einer Bildung des Pulssignals-Korrekturwertes durch Zählung der Pulssignale (High- und Low-Signale) zwischen dem ersten Referenzsignal nach der Drehrichtungsumschaltung und dem folgenden zweiten Referenzsignal nach der tatsächlichen Drehrichtungsumkehr;
- mit einer Definition des nach der Drehrichtungsumkehr zuzuordnenden tatsächlichen statorseitigen Pulssignalzählwertes durch Subtraktion des Pulssignal-Korrekturwertes von dem dem zweiten Referenzsignal entsprechenden Pulssignalzählwert.

6. Verfahren nach zumindest einem der Ansprüche 1-4
- mit einer Bildung des Pulssignal-Korrekturwertes durch Zählen nur der steigenden Flanken ("High"-Flanken) der Pulssignale bzw. nur der fallenden Flanken ("Low"-Flanken) der Pulssignale zwischen dem ersten Referenzsignal nach der Drehrichtungsumkehrschaltung und dem folgenden zweiten Referenzsignal nach der tatsächlichen Drehrichtungsumkehr;
- mit einer Definition des nach der Drehrichtungsumkehr zuzuordnenden tatsächlichen statorsseitigen Pulssignalzählwertes durch Subtraktion des doppelten Pulssignal-Korrekturwertes von dem dem zweiten Referenzsignal entsprechenden Pulssignalzählwert.

7. Vorrichtung zur Durchführung des Verfahrens nach zumindest einem der Ansprüche 1-6
- mit einem asymmetrischen rotorseitigen Geberrad (1) für die Folge der drehzahlproportionalen Pulsfolgen mit dem zwischenliegenden Referenzsignal;
- mit einem einzigen statorseitigen Sensor (2) zum Empfang der Signale des rotorseitigen Geberrades (1);
- mit einer Auswertevorrichtung (4) zur Bildung des Pulssignal-Korrekturwertes und Bestimmung des der tatsächlichen Drehrichtungumkehr entsprechenden Pulssignalzählwertes.

8. Vorrichtung nach Anspruch 7
- mit einem Geberrad (1) in Form eines Magnetrades mit über den Umfang verteilten, insbesondere aufmagnetisierten, Magnet-Polen (N;S;S_{L});
- mit einem Referenz-Signalgeber in Form eines Poles (S_{L}) mit im Vergleich zur jeweiligen Polbreite (α) der übrigen Pole (N;S) unterscheidbarer, insbesondere kleinerer bzw. größerer Polbreite (β).

9. Vorrichtung nach Anspruch 8
- mit einem Geberrad (1) mit aufmagnetisierten Magnetpolen.

10. Vorrichtung nach zumindest einem der Ansprüche 7-9
- mit einem statorseitigen Sensor (2) in Form eines Hall-elementes.
